(19) Europäisches Patentamt
European Patent Office
Office européen des brevets

(11) EP 3 914 384 B1

# (12) EUROPEAN PATENT SPECIFICATION

(45) Date of publication and mention of the grant of the patent:
**11.12.2024 Bulletin 2024/50**

(21) Application number: **20702009.0**

(22) Date of filing: **24.01.2020**

(51) International Patent Classification (IPC):
***B01J 13/06*** *(2006.01)*

(52) Cooperative Patent Classification (CPC):
**B01J 13/06**

(86) International application number:
**PCT/EP2020/051837**

(87) International publication number:
**WO 2020/152362 (30.07.2020 Gazette 2020/31)**

## (54) DIALCOHOL CELLULOSE-BASED SPHERICAL CAPSULES

KUGELFÖRMIGE KAPSELN AUF DIALKOHOLZELLULOSEBASIS

CAPSULES SPHÉRIQUES DE DIALCOOL À BASE DE CELLULOSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.01.2019 EP 19153646**

(43) Date of publication of application:
**01.12.2021 Bulletin 2021/48**

(73) Proprietor: **Nouryon Chemicals International B.V.**
**6824 BM Arnhem (NL)**

(72) Inventors:
- **LARSSON, Per**
  **6824 BM Arnhem (NL)**
- **MYSTEK, Katarzyna**
  **6824 BM Arnhem (NL)**
- **WÅGBERG, Lars**
  **6824 BM Arnhem (NL)**
- **LARSSON KRON, Anna**
  **6824 BM Arnhem (NL)**
- **ANDREASSON, Bo**
  **6824 BM Arnhem (NL)**

(74) Representative: **LKGlobal UK Ltd.**
**Cambridge House**
**Henry Street**
**Bath BA1 1BT (GB)**

(56) References cited:
**WO-A1-2018/135994**

- **P. A. LARSSON ET AL: "Towards natural-fibre-based thermoplastic films produced by conventional papermaking", GREEN CHEMISTRY, vol. 18, no. 11, 1 January 2016 (2016-01-01), GB, pages 3324 - 3333, XP055421728, ISSN: 1463-9262, DOI: 10.1039/C5GC03068D**
- **PER A. LARSSON ET AL: "Highly ductile fibres and sheets by core-shell structuring of the cellulose nanofibrils", CELLULOSE, vol. 21, no. 1, 5 November 2013 (2013-11-05), Netherlands, pages 323 - 333, XP055613162, ISSN: 0969-0239, DOI: 10.1007/s10570-013-0099-9**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

### Technical Field

The invention relates to hollow spherical capsules made from cellulose-based biopolymers, and also to a process for their production.

### Background Art

Thermally expandable microspheres are known in the art, and are described for example in US3615972, WO 00/37547 and WO2007/091960. A number of examples are sold under the trade name Expancel®. They can be expanded to form extremely low weight and low density fillers, and find use in applications such as foamed or low density resins, paints and coatings, cements, inks and crack fillers. Consumer products that often contain expandable microspheres include lightweight shoe soles (for example for running shoes), textured coverings such as wallpaper, solar reflective and insulating coatings, food packaging sealants, wine corks, artificial leather, foams for protective helmet liners, and automotive weather strips.

Thermally expandable polymer microspheres usually comprise a thermoplastic polymeric shell, with a hollow core comprising a blowing agent which expands on heating. Examples of blowing agents include low boiling hydrocarbons or halogenated hydrocarbons, which are liquid at room temperature, but which vapourise on heating. To produce expanded microspheres, the expandable microspheres are heated, such that the thermoplastic polymeric shell softens, and the blowing agent vapourises and expands, thus expanding the microsphere. Typically, the microsphere diameter can increase between 1.5 and 8 times during expansion.

A problem associated with the thermoplastic polymers typically used in the microspheres is that they are not derived from sustainable sources. Typical monomers include those based on acrylates, acrylonitriles, acrylamides, vinylidene dichloride and styrenes, which are mainly derived from petrochemical sources. In addition, many polymers are non-biodegradeable, or at least biodegrade so slowly that they risk cumulative build-up in the environment.

Hollow polymeric spheres with larger dimensions, e.g. on the millimetre scale, can also be made. They have potential for use as drug delivery agents, for example, and hence their production using biologically sourced polymers would be desirable to help improve their compatibility and acceptance.

Cellulose spheres can be made, as described for example by Pettersson and Eriksson in Anal. Biochem., 2000, 285(2), 220-224. However, these are bead-like spheres, as opposed to hollow "core/shell" type capsules. They also tend to be inflexible and cannot be expanded once formed.

Larsson et al. describe in Green Chemistry, vol. 18, no. 11, 3324-3333 natural-based thermoplastic films produced by conventional papermaking and focus on modifying cellulose fibers on the outer surface by forming dialcohol cellulose so that the modified cellulose forms an amorphous shell surrounding the still intact core of the cellulose.

Therefore, there is a need for alternative biologically-sourced or biologically-derived polymers that can successfully form spherical capsules and/or microcapsules having a core-shell structure, including those which can be expanded post-synthesis.

### Summary of Invention

The invention is directed to a spherical capsule comprising a polymeric shell surrounding a hollow core, in which the polymeric shell comprises an optionally substituted dialcohol cellulose.

The invention is also directed to a process for preparing such spherical capsules, comprising mixing a solution comprising optionally substituted dialcohol cellulose and one or more non-polar organic compounds with an antisolvent to form spherical capsules with the above-characteristics, wherein the antisolvent comprises or consists of one or more compounds.

The antisolvent can have a calculated dielectric constant, $\varepsilon_{anti}$ of less than 80.1, according to the equation:

$$\varepsilon_{anti} = \sum_{i=1}^{n} \varepsilon_i M_i$$

where:

$\varepsilon_{anti}$ = the calculated dielectric constant of the antisolvent at 20°C;
$\varepsilon_i$ = the dielectric constant of pure compound i at 20°C;

n = the number of different compounds in the antisolvent;
$M_i$ = the mole fraction of compound i in the antisolvent.

Additionally, or alternatively, the antisolvent can have a calculated relative polarity, $[E_T^N]_{anti}$ of less than 1.00, calculated according to the equation:

$$[E_T^N]_{anti} = \sum_{i=1}^{n} [E_T^N]_i \, M_i$$

where:

$[E_T^N]_{anti}$ = the calculated relative polarity of the antisolvent;
$[E_T^N]_i$ = the relative polarity of pure compound i at 25°C and atmospheric pressure, compared to water;
n = the number of different compounds in the antisolvent;
$M_i$ = the mole fraction of compound i in the antisolvent.

Additionally or alternatively, the antisolvent can comprise or consist of one or more compounds selected from $C_{1-6}$ alcohols, $C_{2-6}$ diols, $C_{3-6}$ triols, $C_{1-6}$ haloalcohols, $C_{1-6}$ halodialcohols, $C_{1-6}$ alcoholethers, $C_{1-6}$ glycol ethers or glycerol ethers, $C_{1-6}$ ketones and diketones, $C_{1-6}$ aldehydes, $C_{1-8}$ haloethers, $C_{1-6}$ amines, $C_{1-6}$ alcoholamines, $C_{1-6}$ carboxylic acids and also their anhydrides and $C_{1-4}$ esters, $C_{1-6}$ nitriles, $C_{1-6}$ amides and their $C_{1-2}$ alkyl N- or N,N-substituted derivatives, $C_{4-8}$ cyclic anhydrides or amides, $C_{1-6}$ organosulfates and $C_{1-6}$ sulfoxides. In addition, the antisolvent can also comprise water.

Additionally or alternatively, the one or more non-polar organic compounds can have a solubility in the antisolvent of less than 1 wt%.

In the discussion below, the terms "(substituted) dialcohol cellulose", "dialcohol cellulose and/or substituted dialcohol cellulose" and "optionally substituted dialcohol cellulose" have the same meaning.

## Brief Description of Drawings

Figure 1 is a collection of photographs of spherical capsules made using $C_{1-2}$ alcohols or mixtures of water and $C_{1-2}$ alcohols as antisolvents

Figure 2 shows photographs of wet and air-dried capsules of dialcohol cellulose;

Figure 3 shows electron micrographs of freeze-dried wet dialcohol cellulose capsules and air-dried capsules;

Figure 4 shows photographs of pre- and post-expanded dialcohol cellulose capsules when suspended in water;

Figure 5 shows photographs of pre- and post-expanded wet dialcohol cellulose capsules;

Figure 6 shows comparative photographs of pre- and post-expanded wet capsules of dialcohol cellulose and cellulose.

## Description of Embodiments

In this disclosure, dialcohol cellulose refers to a form of modified cellulose, in which at least some of the glucose monomer rings have been opened. This is typically achieved by oxidation, which breaks the C2-C3 carbon-carbon bond to form two aldehyde groups, which are subsequently reduced to alcohol groups. The reaction can be represented by the Scheme (1) below:

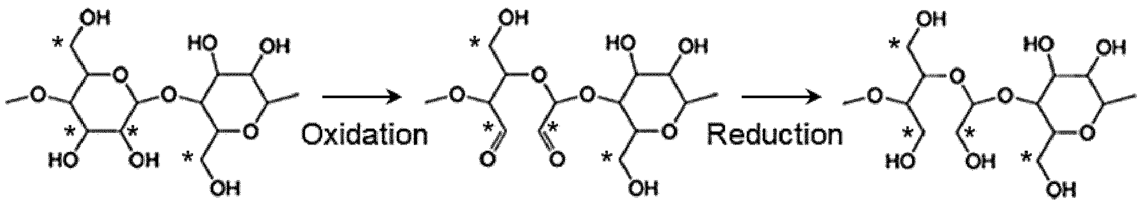


Scheme (1)

The formation of dialcohol cellulose from cellulose is well-known, and is described for example in Kasai et al; Cellulose, 2014, 21, 769-776, Larsson et al; Cellulose, 2014, 21, 323-333, and Larsson and Wågberg; Green Chem., 2016, 18, 3324-3333. The general procedure involves taking cellulose or methylol cellulose (i.e. a cellulose treated with formaldehyde and DMSO) and treating it with an oxidising agent, for example a periodate salt such as sodium periodate ($NaIO_4$), to form a ring-opened dialdehyde compound. The aldehyde groups are then reduced to hydroxyl groups using a reducing agent such as a tetraborohydride salt (e.g. $NaBH_4$). The so-reduced material is termed dialcohol cellulose.

The extent of ring opening can be varied, for example by varying the length of time that the cellulose is held in contact with the oxidizing agent, the temperature of treatment, and/or the relative ratio of cellulose to oxidant. In embodiments, the percentage of ring-opened glucose monomers in the cellulose (often termed the degree of oxidation) is up to 100%, for example up to 70%, such as up to 50% or up to 40%. In embodiments, it is at least 1%, for example at least 5%, or at least 10%.

The extent of glucose ring-opening of the dialcohol cellulose can be determined by calculating the carbonyl content of the cellulose after the oxidation step, but before the reduction step. In embodiments, after the oxidation phase but before the reduction phase, the carbonyl content is in the range of from 0.001 to 12 mmol $g^{-1}$, for example from 1 to 11, from 3 to 9 or from 5 to 8 mmol $g^{-1}$. These values can be determined using known methods, such as the hydroxylamine hydrochloride-based methods described in Zhao and Heindel; Pharm Res 1991, 8(3), 400-402 and Larsson et al; Cellulose, 2008, 15, 837-847, and as described by Larsson et al, Cellulose, 2014, 21 on page 325.

The carbonyl content of the dialcohol cellulose after reduction is typically in the range of from 0 to 10 mmol $g^{-1}$, for example in the range of from 0 to 7 mmol $g^{-1}$ or from 0 to 4 mmol $g^{-1}$. In embodiments, there is at least some carbonyl content, for example at least 0.001 mmol $g^{-1}$.

The extent of ring opening can also be correlated with a so-called crystallinity index of the cellulose. Unmodified cellulose has a crystalline structure. However, the ring opening introduces amorphous regions, which is believed to introduce improved ductility to the cellulose, making it more suitable for spherical capsule formation, particularly for expandable capsules.

The extent of crystallinity of the dialcohol cellulose can be determined by comparing the intensity of the cellulose (002) peak and the amorphous intensity, as shown for example in Larsson et al, Cellulose, 2014, 21, 323-333, in particular on page 327, based on Segal et al; Text. Res. J., 1959, 29(10), 786-794. The amorphous intensity can be measured from the minimum height between the (002) and (101) cellulose peaks.

In embodiments, the crystallinity index is 80 or less, for example 50 or less. In further embodiments, the crystallinity index is 30 or less. In embodiments, there is at least some crystallinity, for example the crystallinity index is at least 1 or at least 10. Thus, exemplary ranges of crystallinity index include from 0 to 80, from 0 to 50 or from 0 to 30, for example from 1 to 80, from 1 to 50 or from 1 to 30. In further embodiments, the crystallinity index range is from 10 to 80, or from 10 to 50, such as from 10 to 30.

The capsules are based on a polymeric shell comprising or consisting of a dialcohol cellulose, which is optionally modified with one or more substituents as described further below.

The polymeric shell can include one or more additional polymeric components, which can also be selected from optionally substituted dialcohol celluloses.

In embodiments, hydroxyl moieties on the dialcohol cellulose can be functionalised, for example by one or more functional groups. Thus, the dialcohol cellulose can comprise one or more functional groups represented by Formulae (1) to (3) below:

$$-C^gR^b_2 - O - R^a - A \qquad \text{Formula (1)}$$

$$-C^gR^b_2-O-\overset{\overset{\displaystyle O}{\|}}{C}-R^a-A \qquad \text{Formula (2)}$$

$$-C^gR^b_2-O-\left(CR^b_2\right)_y-\overset{\overset{\displaystyle O}{\|}}{C}-R^a-A \qquad \text{Formula (3)}$$

In other embodiments, the dialcohol cellulose can additionally or alternatively comprise aldehyde groups formed on oxidation of the cellulose, and/or functional groups based on reactions of such aldehyde groups. Thus, the dialcohol cellulose can additionally or alternatively comprise one or more groups according to formulae (4) to (7) below:

$$-\overset{\overset{\displaystyle O}{\|}}{C^g}-N(-R^a-A)_2 \qquad \text{Formula (4)}$$

$$-\overset{\overset{\displaystyle Y-R^b}{|}}{C^g}R^b-N(-R^a-A)_2 \qquad \text{Formula (5)}$$

$$-\overset{\overset{\displaystyle NR^b}{\|}}{C^g}-R^a-A \qquad \text{Formula (6)}$$

$$-C^gR^b_2-NR^b-\overset{\overset{\displaystyle O}{\|}}{C}-R^a-A \qquad \text{Formula (7)}$$

In the above formulae (1) to (7), $C^g$ is a carbon atom that is part of the dialcohol cellulose backbone, i.e. any of the atoms marked by (*) in Scheme (1) above.

A can be selected from -H, - $OR^b$, and -C(O)$OR^b$. In embodiments, A is selected from - H and -C(O)OH.

In formula (5), Y is oxygen or is absent, i.e. a direct bond between $C^g$ and $R^b$.

$R^a$ can be selected from saturated or unsaturated aliphatic groups having from 1 to 11 carbon atoms, and which can be linear, branched or cyclic.

$R^a$ can also be selected from 5- and 6-membered aromatic rings.

$R^a$ can optionally comprise one or more substituents selected from -OH, halide, $C_{1-4}$ alkyl, and $C_{1-4}$ alkoxy, where the $C_{1-4}$ alkyl and $C_{1-4}$ alkoxy groups are optionally substituted with one or more groups selected from halide and -OH.

$R^a$ in embodiments comprises from 1 to 7 carbon atoms, for example from 1 to 5, or from 1 to 3 carbon atoms.

In formulae (2)-(7), where A is H, $R^a$ can optionally be absent, such that it represents a chemical bond that directly links A and the corresponding moiety in Formula (2) to (7) to which $R^a$ would otherwise be attached. In embodiments, the group $R^a$-A can be an $R^b$ group.

$R^b$ on each occurrence is independently selected from H and $C_{1-4}$ alkyl groups, for example $C_{1-2}$ alkyl groups, optionally with one or more substituents selected from halide and -OH groups. In embodiments, the $C_{1-4}$ alkyl groups or $C_{1-2}$ alkyl groups are unsubstituted. In Formulae (1) to (3), the group - $C^gR^b_2$ - is typically -$C^gH_2$ -.

In embodiments, $R^a$ can be a saturated linear or branched aliphatic $C_vR^c_{2v}$ group or a cyclic $C_wR^c_{2w-2}$ aliphatic group. v is an integer in the range of from 1 to 11, for example in the range of from 1 to 8, such as from 1 to 6 or from 1 to 4. w is an integer in the range of from 3 to 11, for example from 4 to 6

$R^c$ on each occurrence is independently selected from H, -OH, halide, $C_{1-4}$ alkyl, and $C_{1-4}$ alkoxy, where the

$C_{1-4}$ alkyl and $C_{1-4}$ alkoxy groups are optionally substituted with one or more groups selected from halide and -OH.

In formula (3), y is an integer in the range of from 1 to 4, and in embodiments all occurrences of $R^b$ are H.

In embodiments, in formulae (4) to (7), $R^b$ groups on $C^n$ are H.

In embodiments, $R^a$ can be an unsaturated linear or branched aliphatic $C_xR^c_{2x-2y}$ group comprising "y" double bonds. x is an integer in the range of from 2 to 11, for example from 2 to 6 or from 2 to 4. y represents the number of double bonds, and is typically 1 or 2.

In further embodiments, $R^a$ can be an unsaturated cyclic aliphatic $C_wR^c_{2w-2y-2}$ group comprising "y" double bonds, where y is typically 1 or 2, and w is as defined above.

In still further embodiments, $R^a$ can be a $C_zR^c_{z-2}$ aromatic group. z is an integer selected from 5 and 6.

In still further embodiments, $R^a$ can be a linear or branched aliphatic group comprising a cyclic aliphatic or aromatic ring. Thus, $R^a$ can be a $C_pR^c_{2p-2q} - E - C_rR^c_{2r-2s}$ group having no more than 11 carbon atoms, where E is $C_wR^c_{2w-2}$, $C_wR^c_{2w-2y-2}$, or $C_zR^c_{z-2}$ as defined above. p and r are each independently a whole number from 0 to 8, where p + r is at least 1. q and s are each the number of double bonds in the respective non-cyclic aliphatic component. In embodiments, each of q and s are independently selected from 0, 1 and 2.

Halides are typically selected from F and Cl. In embodiments, however, the functional group is halide-free, such that there are no halides in groups A, $R^a$, $R^b$ and $R^c$.

In embodiments, at least one $R^c$ group is H. In other embodiments no more than two $R^c$ groups are other than H, and in further embodiments, no more than one $R^c$ group is other than H. In still further embodiments, all $R^c$ groups are H.

In the above definitions of $R^a$, $R^b$ and $R^c$, where there is more than one -OH substituent, there is typically no more than one -OH substituent per carbon atom.

In certain embodiments, $R^a$ is an optionally substituted $C_1$-$C_8$ aliphatic (alkylene) group. In other embodiments, $R^a$ is an optionally substituted $C_6$ aromatic ring. In further embodiments, $R^a$ is unsubstituted.

Substituted dialcohol cellulose materials can be made by known means. For example carboxlate-functionalised materials (e.g. those of formula (2) above) can be made using the method of Nishio et al; Cellulose, 2006 (13), 245-259 can be used, or the method described in DE102008024089. Other condensation reactions (e.g. to form those of Formula (1)) include acid-catalysed condensation with an alcohol or alkoxide. Materials with substituents of formula (3) can be made by alkali-catalysed reaction with a halocarboxylic acid (e.g. chloroacetic acid). For substituents of Formulae (4) to (7), the groups can be made by conventional reactions of un-reduced aldehyde groups formed when the cellulose ring is oxidised as set out above.

In embodiments, there are one or more substituents of formula (2), where the substituent is selected from acetate, propionate, butyrate, pentanoate, hexanoate, heptanoate, octanoate and phthalate. In further embodiments, it is selected from acetate, propionate and butyrate.

The degree of substitution (DS) of the hydroxyl groups of the cellulose by the one or more substituent groups can be in the range of from 0 to 3.2, for example in the range of from 0 to 3. In embodiments, the degree of substitution is zero, i.e. unsubstituted dialcohol cellulose is used.

The degree of polymerization (DP) of the (substituted) dialcohol cellulose can be determined by conventional methods, e.g. using the alkaline size exclusion chromatography (SEC) method described by Kasai et al in Cellulose, 2014, 21, 769-776. Typically, the DP value will be in the range of from 100 to 10 000, for example in the range of from 200 to 6 000.

The glass transition temperature ($T_g$) and the melting point of the (substituted) dialcohol cellulose can be modified or controlled by varying the functional groups on the dialcohol cellulose, by varying the molecular weight, or by varying the extent of oxidation or hydroxylation of the cellulose.

The spherical capsules are hollow, having a core-shell structure, in which the shell comprises the (substituted) dialcohol cellulose, and the hollow core contains a fluid, for example liquid or gaseous components deriving from the synthesis mixture. The core does not contain cellulose or cellulose-derivatives, e.g. crystalline cellulose phases, or any of the (substituted) dialcohol cellulose material that is present in the shell. Thus, the spherical capsule has non-uniform density, the density of the polymeric shell being higher than the density of the fluid-containing hollow core.

The (substituted) dialcohol celluloses used to prepare the capsules can have a density of 1.2 to 1.7 g $cm^{-3}$, for example in the range of from 1.35 to 1.60 g $cm^{-3}$.

In embodiments, the spherical capsules are expandable, and the capsule density can drop below 1.00 g $cm^{-3}$, for example in the range of from 0.002 to 0.80 g $cm^{-3}$, or from 0.005 to 0.60 g $cm^{-3}$. In further embodiments, the density of the expanded spherical capsules is in the range of from 0.008 to 0.40 g $cm^{-3}$. Higher densities, particularly densities of 1.00 g $cm^{-3}$ or more, generally mean that the samples are not suitable for use in applications where sphere expansion

is important. These are typically applications where the volume of material must be increased and/or where density reduction is required, e.g. when used in preparing lightweight foam-like materials.

When considering expandable characteristics of the spherical capsules, a number of factors can result in post-expanded densities being too high for effective utilisation. For example, high density can result from poor capsule yield, i.e. the percentage of spherical capsules is too low such that, after expansion, the extent of density reduction is insufficient. Another potential issue is poor expansion characteristics, which can arise where too many of the hollow capsules contain insufficient expansion agent or blowing agent to enable adequate expansion. This can result from the shell being too permeable to the expansion/blowing agent, or due to the shell being too thick or too inflexible to be able to expand. Another potential cause is aggregation or agglomeration of the capsules, which can negatively affect expansion performance.

In synthesising the spherical capsules, the (substituted) dialcohol cellulose is typically first dissolved or dispersed in a solvent, which is typically an organic solvent, although can be in the form of an ionic liquid or a cold aqueous alkali, for example aqueous alkali metal hydroxide where alkali metals are typically selected from Li, Na or K. The solvent is selected such that solubilisation of the (substituted) dialcohol cellulose is achieved. The solvent can be a solvent system comprising more than one component. For example, in embodiments, a solution of lithium chloride in dimethyl acrylamide can be used, as described by Berthold et al in J. Appl. Polymer Sci., 2004, 94(2), 424-431.

In embodiments, the solvent also comprises a non-polar organic compound. This can act as a cavity forming agent, to assist in forming the hollow core of the spherical capsule during the synthetic procedure. The non-polar organic compound is at least partially soluble in the solution which comprises the (substituted) dialcohol cellulose, e.g. a solubility of greater than 1 wt% for example at least 10wt% at 25 °C and atmospheric pressure (i.e. 1.013 bara, where "bara" stands for bar-absolute). The non-polar organic compound is also insoluble, or only partially soluble in the antisolvent. For example, in embodiments, the solubility in the antisolvent is less than 1 wt%, and in embodiments less than 0.5wt%, for example less than 0.1 wt%.

The non-polar organic compound can be the same as so-called "blowing agents" often used in expanding foam or expandable microsphere applications. In this disclosure, the term "blowing agent" means the same as "non-polar organic compound".

The non-polar organic compound typically has a boiling point above 25°C at 5.0 bara pressure or above 25°C at 3.0 bara pressure. Boiling points at elevated pressures can be calculated using the Clausius Clapeyron equation. Typically, the non-polar organic compound has a boiling point of greater than -50 °C at atmospheric pressure.

Typically, they have a boiling point of 250 °C or less at atmospheric pressure, for example 150°C or less, or 50°C or less. In embodiments, the boiling point at atmospheric pressure is less than 0 °C.

The blowing agent is preferably inert, and does not react with the cellulose-based shell.

Examples of blowing agents include dialkyl ethers, alkanes and halocarbons, e.g. chlorocarbons, fluorocarbons or chlorofluorocarbons. In embodiments, the dialkyl ether comprises two alkyl groups each selected from $C_2$ to $C_5$ alkyl groups. In embodiments, the alkane is a $C_3$ to $C_{12}$ alkane. In embodiments, the haloalkane is selected from $C_1$ to $C_{10}$ haloalkanes. The haloalkanes can comprise one or more halogen atoms selected from chlorine and fluorine. The alkyl or haloalkyl groups in the dialkyl ethers, alkanes and haloalkanes can be linear, branched or cyclic. One or a mixture of one or more blowing agents can be used.

In embodiments, for environmental reasons, the one or more blowing agents are selected from alkyl ethers and alkanes, and in further embodiments the one or more blowing agents are selected from alkanes. Haloalkanes are preferably avoided, due to their potential ozone depletion properties, and also their large global warming potentials.

Examples of suitable blowing agents that can be used include propane, n-pentane, isopentane, neopentane, cyclopentane, cyclohexane, n-butane, isobutane, isohexane, neohexane, heptane, isoheptane, octane, isooctane, isodecane, and isododecane. In embodiments, the blowing agent is selected from $C_3$ to $C_8$ linear or cyclic alkanes. In other embodiments, the blowing agent is selected from $C_4$ to $C_{12}$ iso-alkanes.

The blowing agent is typically selected so that it is insoluble in the water or aqueous phase of the synthesis mixture, but is at least partially soluble or miscible with the antisolvent.

The antisolvent is a liquid compound or a liquid mixture of compounds that causes precipitation of the (substituted) dialcohol cellulose. Thus, it can alternatively be termed a "precipitant" or "precipitating agent". Liquid in this sense means liquid at standard temperature and pressure (25 °C and 1.013 bara). The antisolvent is water-miscible. However, the (substituted) dialcohol cellulose is insoluble, or only partially soluble in the antisolvent. Partially soluble in this sense means that the (substituted) dialcohol cellulose has a solubility of no more than 10 wt% in the antisolvent, for example a solubility of no more than 5 wt%, or in embodiments no more than 1 wt%.

The antisolvent is less polar than water, such that water on its own is not used as an antisolvent. The antisolvent in embodiments has a polarity of greater than that of methanol.

The polarity can be expressed in terms of dielectric constant, $\varepsilon$, at 20 °C. Where there is more than one component of the antisolvent, the dielectric constant can be calculated from the dielectric constant of each of the individual components, suitably scaled based on their molar fractions in the mixture. This can be represented by Equation (1):

$$\varepsilon_{anti} = \sum_{i=1}^{n} \varepsilon_i M_i$$

Equation (1)

where:

$\varepsilon_{anti}$ = the calculated dielectric constant of the antisolvent at 20°C;
$\varepsilon_i$ = the dielectric constant of pure compound i at 20°C;
n = the number of different compounds in the antisolvent;
$M_i$ = the mole fraction of compound i in the antisolvent.

Where n is 1, then a single compound is used in the antisolvent, and $\varepsilon_{anti}$ is the same as the dielectric constant of that single compound.

The above calculation may not truly represent the actual experimentally determined dielectric constant of the antisolvent mixture. However, it has been found that this definition (according to Equation 1) adequately describes which compounds or mixtures of compounds can be used as antisolvents.

The dielectric constant for water at 20 °C is 80.10. Therefore, the dielectric constant ($\varepsilon_{anti}$) of the antisolvent should be below 80.10. In embodiments, the dielectric constant is in the range of from 20.0 to below 80.10, for example in the range of from 20.0 to 80.0. In embodiments, the dielectric constant is also above that of methanol, whose dielectric constant at 20 °C is 33.0. Thus, in embodiments the antisolvent has a dielectric constant ($\varepsilon_{anti}$) of greater than 33.0, for example in the range of from greater than 33.0 to less than 80.1, or from 34.0 to 80.0, such as from 38.0 to 78.0, from 45.0 to 75.0, from 55.0 to 75.0, or from 60.0 to 70.0.

Another way of expressing polarity is by using relative polarity scales, which can be based on shifts in UV/Vis spectroscopic absorption bands of solvatochromic dyes in the presence of the respective solvent, compared to reference solvents. Such determinations are described, for example, by Reichardt in Chem. Rev., 1994, 94, 2319-2358. A dye that can be used is pyridinium N-phenolate betaine dye, and a relative polarity value, $E_T^N$, can be assigned to a solvent, where a value of 1 corresponds to water, and 0 (zero) corresponds to tetramethylsilane (as measured at 25 °C and atmospheric pressure). Therefore, the $E_T^N$ of the antisolvent should be less than 1.00. Where the antisolvent comprises more than one component, then the averaged/scaled value can be calculated from Equation (2), which is similar to that set out above for the dielectric constant:

$$[E_T^N]_{anti} = \sum_{i=1}^{n} [E_T^N]_i M_i$$

Equation (2)

where:

$[E_T^N]_{anti}$ = the calculated relative polarity of the antisolvent;
$[E_T^N]_i$ = the relative polarity of pure compound i, at 25 °C and atmospheric pressure;
n = the number of different compounds in the antisolvent;
$M_i$ = the mole fraction of compound i in the antisolvent.

A list of $E_T^N$ values for many common solvents can be found in the above-mentioned Reichardt review. The $[E_T^N]_{anti}$ value of the antisolvent should be below 1.00. In embodiments, the value is in the range of from 0.50 to 0.97. In further embodiments, the value is above that of methanol, whose value is 0.76. Thus, in embodiments the antisolvent has a value of greater than 0.76, for example in the range of from greater than 0.76 to less than 1.00, for example in the range of from 0.77 to 0.97, such as from 0.80 to 0.95, from 0.85 to 0.94, or from 0.90 to 0.94.

The calculated values of component mixtures may not necessarily match experimentally determined values. However, it has been found that this definition (according to Equation 2) adequately describes which compounds or

mixtures of compounds can be used as antisolvents.

Alcohols (including diols and triols) are conveniently used as an antisolvent, although typically as a mixture in a more polar solvent, for example water. Some examples of solvents that can be included in an antisolvent include $C_{1-6}$ alcohols, $C_{2-6}$ diols, $C_{3-6}$ triols, $C_{1-6}$ haloalcohols, $C_{1-6}$ halodialcohols, $C_{1-6}$ alcoholethers, $C_{1-6}$ glycol ethers or glycerol ethers, $C_{1-6}$ ketones and diketones, $C_{1-6}$ aldehydes, $C_{1-8}$ haloethers, $C_{1-6}$ amines, $C_{1-6}$ alcoholamines, $C_{1-6}$ carboxylic acids and also their anhydrides and $C_{1-4}$ esters, $C_{1-6}$ nitriles, $C_{1-6}$ amides and their $C_{1-2}$ alkyl N- or N,N-substituted derivatives, $C_{4-8}$ cyclic anhydrides or amides, $C_{1-6}$ organosulfates and $C_{1-6}$ sulfoxides. In embodiments, each component of the antisolvent has a dielectric constant of 20.0 or more. Specific examples include mixtures of one or more of the following in water; methanol, ethanol, 1-propanol, 2-propanol, 2-butanol, 2-chloroethanol, 3-chloro-1,2-propanediol, 1,3-butanediol, 1,4-butanediol, 1,5-pentanediol, acetaldehyde, acetone, bis(2-chloroethyl) ether, 2,4-pentanedione, t-butylamine, formic acid, acetic anhydride, acetonitrile, butanenitrile, formamide, N-methylformamide, N,N'-dimethyl acetamide, N,N-dimethylformamide, 2-pyrrolidone, dimethyl sulfate, epichlorohydrin, dimethylsulfoxide, ethylene glycol, ethylene glycol monomethyl ether, ethylene glycol monoethyl ether, ethylene glycol dimethyl ether, diethylene glycol, triethylene glycol, glycerol, ethanolamine, diethanolamine, and triethanolamine.

In embodiments, antisolvents do not comprise halogen-containing compounds or sulfoxide-containing compounds, due to their potentially negative environmental effects.

To prepare the spherical capsules, a solution comprising (substituted) dialcohol cellulose is prepared. The extent of oxidation of the dialcohol cellulose and/or the selection of substituent groups can be tailored to help ensure full miscibility with the solvent or solvent system. In embodiments, the solution also comprises the one or more non-polar organic compounds/blowing agents.

A suitable medium or solvent in which the (substituted) dialcohol cellulose is soluble is described by Berthold et al in J. Appl. Polymer Sci., 2004, 94(2), 424-431, which uses a solution of lithium chloride (LiCl) in dimethyl acetamide (DMAc). The concentration of the (substituted) dialcohol cellulose is typically in the range of from 0.1 to 10 wt%, for example in the range of from 0.5 to 5 wt%.

The solution comprising (substituted) dialcohol cellulose also comprises dissolved, non-polar organic compound (blowing agent). Typical concentrations will typically depend on the solubility of the non-polar organic compound in the solvent or solvent system, but are generally at least 0.5 wt%, for example in the range of from 0.5 to 10 wt%.

The solution is combined with an antisolvent, such that the (substituted) dialcohol cellulose precipitates and forms spherical capsules with a hollow interior or core. The hollow core can contain one or more of the blowing agent, and may also contain quantities of the solvent and the antisolvent, depending on the porosity or permeability of the (substituted) dialcohol cellulose shell.

The synthesis can take place at temperatures in the range of from 0 to 100 °C, although typically temperatures of 0 to 35 °C are preferred to ensure good solubility and retention of any volatile non-polar organic compounds.

Pressures in the range of from 0.5 to 10 bara can be used. Typically, the pressure is at least at least 0.9 bara or at least atmospheric pressure, as reduced pressures can cause volatile non-polar organic solvents to evaporate, hence reducing their content in the solution comprising (substituted) dialcohol cellulose.

Addition can be carried out dropwise, which facilitates formation of spheres. Further, in embodiments, the (substituted) dialcohol cellulose-containing solution is added to the antisolvent. The size of the drops added can influence the size of spherical capsules formed.

Without being bound by theory, it is thought that the spherical capsules form as a result of localised formation of a separate phase of non-polar organic compound, due to its insolubility in the antisolvent. Thus, when the solution and antisolvent are mixed, precipitation of the (substituted) dialcohol cellulose occurs in a region where a separate non-polar organic phase exists. Since it cannot mix with the fluid phase, this separate non-polar organic phase migrates into the centre of the precipitation region, causing a shell of (substituted) dialcohol cellulose to form around it.

The capsules can be made in a range of sizes, for example having mean particle diameters in the range of from 1 $\mu$m to 5mm. 0.5 to 5.0 mm capsules can be made in one embodiment. In other embodiments, microspherical capsules can be made having diameters from 1 to 1000 $\mu$m. Microspheres as opposed to mm-sized spheres can be made using microfluidic procedures, for example as described by Utada et al in MRS Bulleting, 32, 2007, 702-708, and by Carrick et al in RCS Advances, 2014, 4, 19061-19067.

In embodiments, the spherical or microspherical capsules are expandable. Expanded capsules are typically in the range of from 1.5 to 8 times larger in diameter than unexpanded capsules, for example 2 to 7 times or 3 to 6 times their original diameter.

The particle sizes are suitably measured using light scattering techniques, e.g. laser diffraction, such as low angle laser light scattering (LALLS). Such techniques are particularly helpful for measuring microspheres. Other techniques include image analysis from a photograph or electronic micrograph image of the pre- or post-expanded spherical capsules.

To expand the capsules, they can be heated. The temperature required will be dependent on the boiling point of the blowing agent (non-polar organic compound) used. In embodiments, the temperature is above the boiling temperature of the blowing agent, while at the same time being below the melting temperature of the (substituted) dialcohol cellulose. Typical temperatures for expansion include ranges of 0 to 200°C, for example 20 to 200°C, such as 50 to 190°C or 100 to 190°C.

In other embodiments, the pressure around the capsules is reduced. This can be achieved either by reducing the surrounding pressure by 10% or more, for example 20% or more or 50% or more. Thus, for example, if the synthesis was carried out at ambient pressure, e.g. 1 bara, then a pressure of 0.9 bara or less, for example 0.8 bara or less or 0.5 bara or less can be used. This technique can cause evaporation or expansion of the blowing agent, which expands the capsules.

For expansion, the capsules should be in a softened state. This means either exceeding the glass transition temperature ($T_g$) of the (substituted) dialcohol cellulose, or by keeping the capsules in a wet state such that the wall is soft, e.g. by wetting them with anti-solvent or water under reduced pressure and/or at elevated temperature.
to a temperature in the range of from 30°C to 200 °C, for example in the range of from 30 to 150 °C.

Ways of heating the spherical capsules include direct or indirect contact with a heat transfer medium such as steam or pressurised steam, as described for example in WO2004/056549, WO2014/198532 and WO2016/091847. In further embodiments, direct or indirect contact with other heated gases (e.g. air or nitrogen) optionally mixed with steam can be used. In still further embodiments, where indirect heating is used, a liquid heat transfer medium can be used, e.g. heated oil. In another embodiment, IR radiation can be used to heat the capsules.

Where the blowing agent is relatively involatile, then heating may not be necessary. For example, if the synthesis is conducted under elevated pressure, then it may simply be necessary to relieve the pressure to ensure expansion of the spherical capsules. Additionally, filtering the material from the liquid phase synthesis mixture can also result in expansion without any heating. Conversely, if the blowing agent is relatively involatile, then reduced pressures can be used. In general, pressures in the range of from 0.5 to 1.5 bara, and temperatures in the range of from 10 to 200 °C can be used, depending on the blowing agent, and the extent of molecular weight, ring opening and/or carboxylation or other functionalisation of the dialcohol cellulose.

Expansion properties of the capsules can be evaluated using a thermomechanical analyser (e.g. a Mettler TMA 841) and quantitative data can be obtained from images using suitable software for example STARe software. $T_{start}$ is the temperature at which the expansion starts and $T_{max}$ is the temperature at which maximum expansion is obtained.

The capsules can be separated from the synthesis medium by known means, for example filtration, decantation or centrifugation.

They can be provided in the form of a slurry, for example in an aqueous slurry, or in the form of dried particles (e.g. dry powder). They can also be provided in wet-cake form, where the capsules are not completely dry, and remain loosely adhered to one another. The capsules can be provided in unexpanded or expanded form.

Applications of microspheres include the manufacture of paper (e.g. embossed paper, a paper filler, a sizing agent), inks, corks, cement based compositions, adhesives, foams, insulation materials, coatings, rubber-based products, thermoplastics, thermosets, ceramics, non-woven composite materials, fillers etc. to provide for example a lightweight filler in such applications.

Applications of mm-sized spheres include drug delivery, catalysis, insulating materials, packaging, cosmetics and optics.

## Examples

[Dialcohol Cellulose Synthesis]

A dissolving-grade cellulose pulp was provided by Domsjö Fabriker AB, Sweden (Domsjö Dissolving Plus). The cellulose content was 93wt%, with a surface charge of 29 μeq/g with a degree of polymerization of about 780. N, N- Dimethylacetamide (DMAc) and lithium chloride (LiCl) were purchase from Sigma Aldrich, and propane gas was purchased from AGA Gas AB.

The cellulose fibers were suspended in water at a concentration of 20g/L and allowed to react with sodium periodate, $NaIO_4$. The amount of sodium periodate used was sufficient to ensure a concentration of 1.35 g /g fibre. Also added was 2-propanol (6.3 vol%). The mixture was left for 2 hours in the dark at a temperature of 50 °C. The reaction was stopped by filtration followed by washing with water until a filtrate conductivity of less than 5 μS/cm was achieved.

The resulting fibres at this stage had a carbonyl content of 2.62±0.03 mmol/g, corresponding to approximately 22% of the glucose rings being oxidised and hence ring-opened.

The fibres were then redispersed in water to a concentration of 8 g/L, and allowed to react with sodium borohydride, $NaBH_4$, at a concentration of 0.5 g /g fibre. 0.01M Monosodium phosphate, $NaH_2PO_4$, was also added to ensure the pH was maintained below a value of 10. Reaction was continued for 2 h at room temperature, after which it was stopped by filtration, and the residue washed with water until the filtrate conductivity was below 5 μS/cm.

[Capsule Synthesis]

Cellulose or dialcohol cellulose fibres were allowed to swell in water, and were rendered soluble using a solvent exchange procedure as described by Carrick et al. ACS Appl. Mater. Interfaces, 2014, 6(23), 20928-20935. In this method, the water-swollen fibers were suspended in 96% ethanol for 2 days, before being filtered. The ethanol-swollen fibers were suspended in DMAc, filtered and resuspended in DMAc a total of four times over a period of 2 days. The DMAc-swollen fibers were then dissolved by preparing a 7wt% solution of LiCl/DMAc, by adding lithium chloride over a period of 30 minutes to DMAc that was heated in an oil bath to 110 °C for about 30 min, the LiCl being pre-heated in an oven at 105 °C to remove traces of water.

The solution was allowed to cool to 60 °C, at which point the DMAc-treated cellulose fibers were added to the LiCl/DMAc solution to produce a 1.5 wt% cellulose solution. To facilitate dissolving of the pulp, the solution was stirred over night at room temperature.

Spherical capsules were formed using a solution solidification method described by Carrick et al. in Langmuir 2014, 30(26), 7635-7644. Firstly, 20 mL of the LiCl/DMAc/fibre solution prepared above was saturated with propane gas for 1 hour. Next, an antisolvent was added drop-wise using a needle with a diameter 1.2 mm, resulting in precipitation of mm-sized spherical capsules. The antisolvent used was selected from methanol, ethanol, isopropanol and aqueous mixtures of each of these. Water was also used as a control.

The capsules were washed by placing them in fresh non-solvent 24 h after the precipitation. The washing step was repeated 3 times a day for 2 days, using a shaking table and 250 mL of the non-solvent.

The dimensions of the produced capsules were measured from images captured with an optical microscope. The parameters were assessed on 10 capsules. The surface morphology and the capsules wall thickness were characterized using a Hitachi S-4800 field emission scanning electron microscope (FE-SEM).

[Expansion experiments]

Capsule expansion was performed by exposing the capsules to a decreased external pressure. Some experiments were carried out in water, where the capsules were placed in a water-filled flask connected to a vacuum pump. In order to observe the expansion of the wet-state capsules taken out from water, they were placed in a glass pipette that was sealed at one end, and connected to a vacuum pump at the other end. Performance was assessed using a high-speed camera.

Properties of capsules made from dialcohol cellulose are shown in Table 1.

These results highlight that alcohols are suitable anti-solvents, although improved capsules are obtained when diluted in water, in particular having better gas encapsulation and retention properties. The best results appear to be associated with a polarity of above that of neat methanol, i.e. a relative polarity $[E_T^N]_{anti}$ value of above 0.762 and $\varepsilon_{anti}$ of above 33.7, but below that of water, i.e. below a relative polarity $[E_T^N]_{anti}$ value of 1.000 and $\varepsilon_{anti}$ of below 80.1.

Table 1 - Dialcohol Cellulose Capsule Properties

| Example | Anti-solvent [(a)] | $\varepsilon_{anti}$ | $[E_T^N]_{anti}$ | Spherical? | Gas encapsulation [(b)] |
|---|---|---|---|---|---|
| 1 [(c)] | water | 80.1 | 1.000 | No | no |
| 2 | water/ methanol (1:1) | 65.6 | 0.927 | Yes [(d)] | yes, high |
| 3 | water/ methanol (1 :1.2) | 63.7 | 0.917 | Yes | yes, high |
| 4 | methanol | 33.0 | 0.762 | Yes | no |
| 5 | water/ethanol (1:1) | 67.2 | 0.918 | Yes | yes, lower |
| 6 | ethanol | 25.3 | 0.654 | Yes | no |
| 7 | water/isopropanol (1:1) | 68.7 | 0.913 | Yes | yes, very low |

(continued)

| Example | Anti-solvent [(a)] | $\varepsilon_{anti}$ | $[E_T^N]_{anti}$ | Spherical? | Gas encapsulation [(b)] |
|---|---|---|---|---|---|
| 8 | isopropanol | 20.2 | 0.546 | Yes | no |
| (a) figures in parentheses represent volume ratios<br>(b) measured a few hours after preparation - relative efficiency of gas (propane) retention, based on visual inspection and the size of the hollow inner portion of the capsules<br>(c) comparative example<br>(d) tails present on the capsules | | | | | |

Figure 1 shows photographs demonstrating the effects of different antisolvents, in which (a) relates to Example 4 (methanol only), (b) to Example 2 (1:1 water/methanol), (c) to Example 6 (ethanol only), (d) to Example 5 (1:1 water/ethanol) and (e) to Example 3 (1:1.2 water/methanol).

Mixtures of water/methanol as antisolvent, with $\varepsilon_{anti}$ from about 60 to about 70 and $[E_T^N]_{anti}$ from about 0.90 to 0.95, appeared to give optimum yield, size and homogeneity of the hollow spherical capsules.

Table 2 compares properties of capsules prepared from cellulose and also capsules of Example 3. The cellulose capsules were prepared using a route analogous to that of Example 3, except using cellulose fibres that had not undergone any oxidation/reduction pre-treatment.

Table 2 - Comparison of Cellulose and Dialcohol Cellulose Capsules

| | Dialcohol cellulose (Example 3) | Cellulose |
|---|---|---|
| Solution concentration [wt%] | 1.5 | 1.5 |
| Kinematic viscosity of solution [$mm^2/s$] | 24.54 | 2264.8 |
| Diameter of the wet capsule [mm] | 2.43±0.09 | 2.21±0.06 |
| Weight of the wet capsule [mg] | 4.62±0.21 | 4.61±0.31 |
| Diameter of the dry capsule [mm] | 1.29±0.05 | n/a [(a)] |
| Weight of the dry capsule [mg] | 0.13 | 0.21 |
| Water percentage in the wet capsule [%] | 97.2 | 95.4 |
| Wet Capsule Density [kg $m^{-3}$] | 614.93 | 815.69 |
| Dry Capsule Density [kg $m^{-3}$] | 115.66 | n/a |
| (a) The capsules were significantly deformed, such that their diameter could not be accurately measured. | | |

Figure 2 shows optical microsope images of (a) wet and (b) air-dried dialcohol cellulose capsules of Example 3. The wet sample shows a thicker wall than the dry sample. However, a clear core/shell structure is evident.

Figure 3 shows electron micrographs of capsules of Example 3, which have been (a) freeze-dried, and (b) air-dried, with micrographs (c) and (d) being respective cross sections. Micrographs (e) and (f) are magnified images of the highlighted sections of images (c) and (d) respectively. These micrographs highlight the wall thickness differences between wet and dried samples (the freeze-dried sample was carried out before drying, to preserve the wet characteristics of the capsules). In all cases, a core/shell structure is clearly evident.

Figure 4 shows expansion characteristics of the capsules of Example 3, where (a) is before and (b) is after applying a reduced pressure to a flask containing the spheres suspended in water, as described above.

The change in inner diameter from (a) to (b) is a factor of 1.49 (i.e. inner diameter (b) = 1.49 x inner diameter (a)), i.e. an increase of 49%. The change in outer diameter is a factor of 1.13 from (a) to (b), i.e. an increase of 13%.

Figure 5 shows expansion characteristics of wet (but no longer water-suspended) capsules of Example 3 twenty minutes after their removal from the suspending liquid water, (a) before and (b) after being subjected to reduced pressure in a Pasteur pipette, as described above.

Note that, because the spheres are no longer in a water suspension (c.f. Figure 4), then the polymeric shells are not swelled to the same extent, hence the polymeric shells appear thinner than those in Figure 4.

The radius of the hollow sphere increased by a factor of 1.33 (i.e. a radius increase of 33%).

Figure 6 shows (a) pre- and (b) post-expanded spherical capsules made of (i) cellulose and (ii) dialcohol cellulose.

The dialcohol cellulose hollow spheres expanded to a greater extent, the (outer) radius increasing by a factor of 1.24 (i.e. increase of 24%) compared to a factor of 1.05 (i.e. a 5% increase) for the cellulose capsules.

## Claims

1. Spherical capsules comprising a polymeric shell surrounding a hollow core, in which the polymeric shell comprises an optionally substituted dialcohol cellulose.

2. Spherical capsules as claimed in claim 1, in which the polymeric shell comprises either;

   (i) unsubstituted dialcohol cellulose; or
   (ii) dialcohol cellulose substituted with one or more substituents according to the following formulae (1) to (7).

$$-C^gR^b_2-O-R^a-A \qquad \text{Formula (1)}$$

$$-C^gR^b_2-O-\overset{O}{\overset{\|}{C}}-R^a-A \qquad \text{Formula (2)}$$

$$-C^gR^b_2-O-\left(CR^b_2\right)_k-\overset{O}{\overset{\|}{C}}-R^a-A \qquad \text{Formula (3)}$$

$$-\overset{O}{\overset{\|}{C^g}}-N(-R^a-A)_2 \qquad \text{Formula (4)}$$

$$-\overset{Y-R^b}{\overset{|}{C^gR^b}}-N(-R^a-A)_2 \qquad \text{Formula (5)}$$

$$-\overset{NR^b}{\overset{\|}{C^g}}-R^a-A \qquad \text{Formula (6)}$$

$$-C^gR^b_2-NR^b-\overset{O}{\overset{\|}{C}}-R^a-A \qquad \text{Formula (7)}$$

Where:

$C^g$ is a carbon atom that is part of the dialcohol cellulose backbone;
A is selected from -H, - $OR^b$, and -C(O)$OR^b$;

$R^a$ is selected from;

(a) saturated or unsaturated aliphatic groups having from 1 to 11 carbon atoms, and which can be linear, branched or cyclic; which are optionally substituted by one or more substituents selected from -OH, halide, $C_{1-4}$ alkyl, and $C_{1-4}$ alkoxy, and wherein the $C_{1-4}$ alkyl and $C_{1-4}$ alkoxy groups in turn are optionally substituted with one or more groups selected from halide and -OH;
(b) from 5- and 6-membered aromatic rings, which are optionally substituted as set out in (a);
(c) a saturated linear or branched aliphatic $C_vR^c_{2v}$ group or a cyclic $C_wR^c_{2w-2}$ aliphatic group, where v is an integer in the range of from 1 to 11, where w is an integer in the range of from 3 to 11, and where $R^c$ is independently selected from H, -OH, halide, $C_{1-4}$ alkyl, and $C_{1-4}$ alkoxy, where the $C_{1-4}$ alkyl and $C_{1-4}$ alkoxy groups are optionally substituted as set out in (a);
(d) unsaturated linear or branched aliphatic $C_xR^c_{2x-2y}$ groups comprising "y" double bonds, where x is an integer in the range of from 2 to 11 and y is 1 or 2;
(e) unsaturated cyclic aliphatic $C_wR^c_{2w-2y-2}$ groups comprising "y" double bonds, where y is 1 or 2, and where w is as defined above;
(f) $C_zR^c_{z-2}$ aromatic groups, where z is 5 or 6;
(g) linear or branched aliphatic groups comprising a cyclic aliphatic or aromatic ring of formula $C_pR^c_{2p-2q} - E - C_rR^c_{2r-2s}$ , having no more than 11 carbon atoms, where E is $C_wR^c_{2w-2}$, $C_wR^c_{2w-2y-2}$ , or $C_zR^c_{z-2}$ as defined above, p and r are each independently a whole number from 0 to 8 and p + r is at least 1, and where q and s are each the number of double bonds in the respective non-cyclic aliphatic component and are each independently selected from 0, 1 and 2;
(h) where A is H in Formulae (2) to (7), $R^a$ can be absent;

$R^b$ on each occurrence is independently selected from H and $C_{1-4}$ alkyl groups, optionally with one or more substituents selected from halide and -OH groups;
in formula (3), k is an integer in the range of from 1 to 4; and
in Formula (5), Y is O or is absent.

**3.** A process for preparing spherical capsules as defined in claim 1, comprising mixing a solution comprising dissolved optionally substituted dialcohol cellulose and one or more non-polar organic compounds with an antisolvent to form the spherical capsules, wherein the antisolvent comprises or consists of one or more compounds, and has one or more of the following features:

(i) the antisolvent has a calculated dielectric constant, $\varepsilon_{anti}$ of less than 80.1, where $\varepsilon_{anti}$ is calculated according to the equation:

$$\varepsilon_{anti} = \sum_{i=1}^{n} \varepsilon_i M_i$$

where:

$\varepsilon_{anti}$ = the calculated dielectric constant of the antisolvent at 20°C;
$\varepsilon_i$ = the dielectric constant of pure compound i at 20°C;
n = the number of different compounds in the antisolvent;
$M_i$ = the mole fraction of compound i in the antisolvent;

(ii) the antisolvent has a calculated relative polarity, $[E_T^N]_{anti}$ of less than

1.00, calculated according to the equation:

$$[E_T^N]_{anti} = \sum_{i=1}^{n} [E_T^N]_i \, M_i$$

where:

$[E_T^N]_{anti}$ = the calculated relative polarity of the antisolvent;

$[E_T^N]_i$ = the relative polarity of pure compound i at 25°C and atmospheric pressure, compared to water;

n = the number of different compounds in the antisolvent;

$M_i$ = the mole fraction of compound i in the antisolvent.

(iii) the antisolvent comprises one or more compounds selected from $C_{1-6}$ alcohols, $C_{2-6}$ diols, $C_{3-6}$ triols, $C_{1-6}$ haloalcohols, $C_{1-6}$ halodialcohols, $C_{1-6}$ alcoholethers, $C_{1-6}$ glycol ethers or glycerol ethers, $C_{1-6}$ ketones and diketones, $C_{1-6}$ aldehydes, $C_{1-8}$ haloethers, $C_{1-6}$ amines, $C_{1-6}$ alcoholamines, $C_{1-6}$ carboxylic acids and also their anhydrides and $C_{1-4}$ esters, $C_{1-6}$ nitriles, $C_{1-6}$ amides and their $C_{1-2}$ alkyl N- or N,N-substituted derivatives, $C_{4-8}$ cyclic anhydrides or amides, $C_{1-6}$ organosulfates and $C_{1-6}$ sulfoxides, and optionally also comprises water;
(iv) the solubility of the non-polar organic solvent in the antisolvent is less than 1 wt%.

**4.** A process as claimed in claim 3, in which one or more of the following conditions apply:

(i) the non-polar organic compound is selected from $C_{3-8}$ alkanes and $C_{4-12}$ isoalkanes;
(ii) the polymeric shell of the spherical capsules is as defined in claim 2;
(iii) the $\varepsilon_{anti}$ value of the antisolvent is in the range of from 20.0 to 80.0, or from 34.0 to 80.0.

**5.** A process as claimed in claim 3 or claim 4, in which the solution comprising the optionally substituted dialcohol cellulose is added to the antisolvent.

**6.** A process as claimed in any one of claims 3 to 5, in which the spherical capsules are expandable.

**7.** A process as claimed in claim 6, in which the spherical capsules are expanded by heating to above the glass transition temperature and below the melting temperature of the optionally substituted dialcohol cellulose; and/or by reducing the external pressure by 10% or more.

## Patentansprüche

**1.** Kugelförmige Kapseln umfassend einen polymeren Mantel, der einen hohlen Kern umgibt, wobei der polymere Mantel eine wahlweise substituierte Dialkoholcellulose umfasst.

**2.** Kugelförmige Kapseln nach Anspruch 1, wobei der polymere Mantel entweder:

(i) unsubstituierte Dialkoholcellulose oder
(ii) Dialkoholcellulose umfasst, die mit einem oder mehreren Substituenten den erfolgenden Formeln (1) bis (7) entsprechend substituiert ist

$$-C^gR^b_2 - O - R^a - A$$ Formula (1)

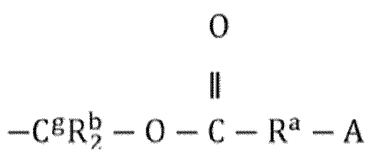

Formula (2)

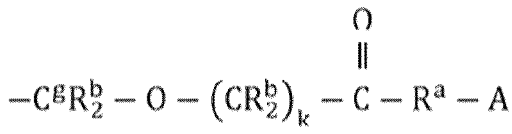

Formula (3)

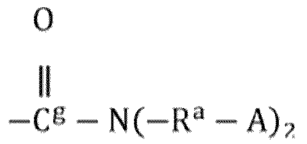

Formula (4)

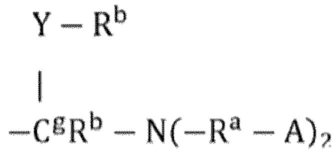

Formula (5)

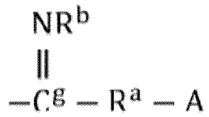

Formula (6)

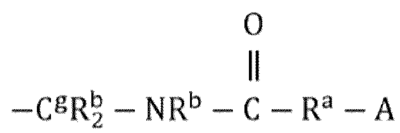

Formula (7)

wobei

$C^9$ ein Kohlenstoffatom ist, das Teil des Dialkoholcelluloserückgrats ist;
A ausgewählt ist unter -H, -$Or^b$ und -C(O)$OR^b$;
$R^a$ ausgewählt ist unter:

(a) gesättigten oder ungesättigten aliphatischen Gruppen, die 1 bis 11 Kohlenstoffatome aufweisen und die linear, verzweigt oder cyclisch sein können; die wahlweise mit einem oder mehreren Substituenten substituiert sind, ausgewählt unter -OH, Halogenid, $C_{1-4}$-Alkyl und $C_{1-4}$-Alkoxy und wobei die $C_{1-4}$-Alkyl- und $C_{1-4}$-Alkoxygruppen wiederum wahlweise mit einer oder mehreren Gruppen substituiert sind, ausgewählt unter Halogenid und OH;
(b) 5- und 6-gliedrigen aromatischen Ringen, die wahlweise wie unter (a) aufgeführt substituiert sind;
(c) einer gesättigten linearen oder verzweigten aliphatischen $C_vR^c_{2v}$-Gruppe oder einer cyclischen aliphatischen $C_wR^c_{2w-2}$-Gruppe, wobei v eine ganze Zahl im Bereich von 1 bis 11 ist, wobei w eine ganze Zahl im Bereich von 3 bis 11 ist und wobei $R^c$ unabhängig ausgewählt ist unter H, -OH, Halogenid, $C_{1-4}$-Alkyl und $C_{1-4}$-Alkoxy, wobei die $C_{1-4}$-Alkyl- und $C_{1-4}$-Alkoxy-Gruppen wahlweise wie unter (a) aufgeführt substituiert sind;
(d) ungesättigten linearen oder verzweigten aliphatischen $C_xR^c_{2x-2y}$-Gruppen, die "y"-Doppelbindungen umfassen, wobei x eine ganze Zahl im Bereich von 2 bis 11 ist und y 1 oder 2 beträgt;
(e) ungesättigten cyclischen aliphatischen $C_wR^c_{2w-2y-2}$- Gruppen, die "y"-Doppelbindungen umfassen, wobei y 1 oder 2 trägt und wobei w wie oben definiert ist;
(f) aromatischen $C_zR^c_{z-2}$-Gruppen, wobei z 5 oder 6 beträgt;
(g) linearen oder verzweigten aliphatischen Gruppen, die einen cyclischen aliphatischen oder aromatischen Ring der Formel $C_pR^c_{2p-2q}$-E-$C_rR^c_{2r-2x}$, der nicht mehr als 11 Kohlenstoffatome aufweist, umfassen, wobei E $C_wR^c_{2w-2}$, $C_wR^c_{2w-2y-2}$ oder $C_zR^c_{z-2}$, wie oben definiert, ist, p und r jedes unabhängig eine ganze Zahl von 0 bis 8 sind und p + r mindestens 1 beträgt und wobei q und s jedes die Anzahl von Doppelbindungen in der entsprechenden nichtcyclischen aliphatischen Komponente ist und jedes unabhängig unter 0, 1 und 2 ausgewählt ist;
(h) wobei A H in den Formeln (2) bis (7) ist, $R^a$ abwesend sein kann;

$R^b$ bei jedem Auftreten unabhängig ausgewählt ist unter H und $C_{1-4}$-Alkylgruppen, wahlweise mit einem oder mehreren Substituenten ausgewählt unter Halogenid und -OH-Gruppen;
in der Formel (3) k eine ganze Zahl im Bereich von 1 bis 4 ist; und
in der Formel (5) Y O ist oder abwesend ist.

**3.** Verfahren für die Herstellung kugelförmiger Kapseln wie in Anspruch 1 definiert, umfassend Mischen einer Lösung umfassend gelöste, wahlweise substituierte Dialkoholcellulose und eine oder mehrere nichtpolare organische Verbindungen, mit einem Anti-Lösungsmittel, um die kugelförmigen Kapseln zu bilden, wobei das Anti-Lösungsmittel eine oder mehrere Verbindungen umfasst oder daraus besteht und eines oder mehrere der folgenden Merkmale aufweist:

(i) das Anti-Lösungsmittel weist eine berechnete Dielektrizitätskonstante $\varepsilon_{anti}$ von weniger als 80,1 auf, wobei $\varepsilon_{anti}$ der Gleichung entsprechend berechnet wird:

$$\varepsilon_{anti} = \sum_{i=1}^{n} \varepsilon_i M_i$$

wobei:

$\varepsilon_{anti}$ = die berechnete Elektrizitätskonstante des Anti- Lösungsmittels bei 20 °C;
$\varepsilon_i$ = die Dielektrizitätskonstante reiner Verbindungen i bei 20 °C;
n = die Anzahl verschiedener Verbindungen in dem Anti-Lösungsmittel;
$M_i$ = die Molfraktion der Verbindung i in dem Anti-Lösungsmittel;

(ii) das Anti-Lösungsmittel weist eine berechnete relative Polarität $[E_T^N]_{anti}$ . von weniger als 1,00, der folgenden Gleichung entsprechend berechnet, auf:

$$[E_T^N]_{anti} = \sum_{i=1}^{n} [E_T^N]_i M_i$$

wobei:
$[E_T^N]_{anti}$ = die berechnete relative Polarität des Anti-Lösungsmittels;
$[E_T^N]_i$ die relative Polarität reiner Verbindung i bei 25 °C und Luftdruck, im Vergleich mit Wasser;
n = die Anzahl verschiedener Verbindungen in dem Anti-Lösungsmittel;
$M_i$ = die Molfraktion der Verbindung i in dem Anti-Lösungsmittel,

(iii)das Anti-Lösungsmittel umfasst eine oder mehrere Verbindungen ausgewählt unter $C_{1-6}$-Alkoholen, $C_{2-6}$-Diolen, $C_{3-6}$-Triolen, $C_{1-6}$-Haloalkoholen, $C_{1-6}$-Halodialkoholen, $C_{1-6}$-Alkoholethern, $C_{1-6}$-Glycolethern oder -Glycerolethern, $C_{1-6}$-Ketonen und Diketonen, $C_{1-6}$-Aldehyden, $C_{1-8}$-Haloethern, $C_{1-6}$-Aminen, $C_{1-6}$-Alkoholaminen, $C_{1-6}$-Carbonsäuren und auch ihren Anhydriden und $C_{1-4}$-Estern, $C_{1-6}$-Nitrilen, $C_{1-6}$-Amiden und ihren $C_{1-2}$-Alkyl-N- oder -N,N-substituierten Derivaten, cyclischen $C_{4-8}$-Anhydriden oder -Amiden, $C_{1-6}$-Organosulfaten und $C_{1-6}$-Sulfoxiden und wahlweise auch Wasser umfasst;
(iv) die Löslichkeit des nichtpolaren organischen Lösungsmittels in dem Anti-Lösungsmittel beträgt weniger als 1 Gew.-%.

**4.** Verfahren nach Anspruch 3, wobei eine oder mehrere der folgenden Bedingungen zutreffen:

(1) die nichtpolare organische Verbindung wird unser $C_{3-8}$-Alkanen und $C_{4-12}$-Isoalkanen ausgewählt;

(ii) der polymere Mantel der kugelförmigen Kapseln ist wie in Anspruch 2 definiert;
(iii) der $\varepsilon_{anti}$-Wert des Anti-Lösungsmittels liegt im Bereich von 20,0 bis 80,0 oder von 34,0 bis 80,0.

**5.** Verfahren nach Anspruch 3 oder Anspruch 4, wobei die Lösung, die die wahlweise substituierte Dialkoholcellulose umfasst, dem Anti-Lösungsmittel zugegeben wird.

**6.** Verfahren nach einem der Ansprüche 3 bis 5, wobei die kugelförmigen Kapseln expandierbar sind.

**7.** Verfahren nach Anspruch 6, wobei die kugelförmigen Kapseln durch Erwärmen auf über die Glasübergangstemperatur und unter die Schmelztemperatur der wahlweise substituierten Dialkoholcellulose und/oder durch Reduzieren des Außendrucks um 10 % oder mehr expandiert werden.

## Revendications

**1.** Capsules sphériques comprenant une coque polymère entourant un noyau creux, dans lesquelles la coque polymère comprend une cellulose dialcoolique éventuellement substituée.

**2.** Capsules sphériques selon la revendication 1, dans lesquelles la coque polymère comprend soit :

(i) une cellulose dialcoolique non substituée ; ou
(ii) une cellulose dialcoolique substituée par un ou plusieurs substituants selon les formules (1) à (7) suivantes

$$-C^{g}R^{b}_{2} - O - R^{a} - A$$

Formule (1)

$$-C^{g}R^{b}_{2} - O - \overset{O}{\overset{\|}{C}} - R^{a} - A$$

Formule (2)

$$-C^{g}R^{b}_{2} - O - \left(CR^{b}_{2}\right)_{k} - \overset{O}{\overset{\|}{C}} - R^{a} - A$$

Formule (3)

$$-\overset{O}{\overset{\|}{C^{g}}} - N(-R^{a} - A)_{2}$$

Formule (4)

$$-\overset{Y - R^{b}}{\overset{|}{C^{g}}}R^{b} - N(-R^{a} - A)_{2}$$

Formule (5)

$$-\overset{NR^{b}}{\overset{\|}{C^{g}}} - R^{a} - A$$

Formule (6)

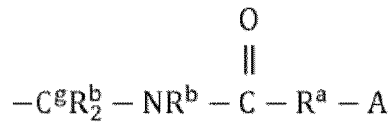

Formule (7)

où :

$C^g$ est un atome de carbone qui fait partie du squelette de la cellulose dialcoolique ;
A est choisi parmi -H, $-OR^b$, et $-C(O)OR^b$ ;
$R^a$ est choisi parmi :

(a) des groupes aliphatiques saturés ou insaturés ayant de 1 à 11 atomes de carbone, et qui peuvent être linéaires, ramifiés ou cycliques ; qui sont éventuellement substitués par un ou plusieurs substituants choisis parmi les groupes -OH, d halogénure, un groupe alkyle en $C_{1-4}$ et un groupe alcoxy en $C_{1-4}$, et les groupes alkyle en $C_{1-4}$ et alcoxy en $C_{1-4}$ étant à leur tour éventuellement substitués par un ou plusieurs groupes choisis parmi un halogénure et -OH ;
(b) parmi des cycles aromatiques à 5 et 6 chaînons, qui sont éventuellement substitués comme indiqué en (a) ;
(c) un groupe aliphatique saturé linéaire ou ramifié $C_vR^c_{2v}$ ou un groupe aliphatique cyclique $C_wR^c_{2w-2}$, où v est un nombre entier compris dans la plage allant de 1 à 11, où w est un nombre entier compris dans la plage allant de 3 à 11, et où $R^c$ est indépendamment choisi parmi les groupes H, -OH, halogénure, alkyle en $C_{1-4}$ et alcoxy en $C_{1-4}$, où les groupes alkyle en $C_{1-4}$ et alcoxy en $C_{1-4}$ sont éventuellement substitués comme indiqué en (a) ;
(d) des groupes aliphatiques insaturés linéaires ou ramifiés $C_xR^c_{2x-2y}$ comprenant des doubles liaisons « y », où x est un nombre entier compris dans la plage allant de 2 à 11 et y est 1 ou 2 ;
(e) des groupes aliphatiques cycliques insaturés $C_wR^c_{2w-2y-2}$ comprenant des doubles liaisons « y », où y est 1 ou 2, et où w est tel que défini ci-dessus ;
(f) des groupes aromatiques $C_zR^c_{2z-2}$, où z est 5 ou 6 ;
(g) des groupes aliphatiques linéaires ou ramifiés comprenant un cycle aromatique ou aliphatique cyclique de formule $C_pR^c_{2p-2q}$ - E - $C_rR^c_{2r-2s}$, n'ayant pas plus de 11 atomes de carbone, où E est $C_wR^c_{2w-2}$, $C_wR^c_{2w-2y-2}$ ou $C_zR^c_{z-2}$ tels que définis ci-dessus, p et r sont chacun indépendamment un nombre entier de 0 à 8 et p + r est au moins 1, et où q et s sont chacun le nombre de doubles liaisons dans le composant aliphatique non cyclique respectif et sont chacun indépendamment choisis parmi 0, 1 et 2 ;
(h) lorsque A est H dans les formules (2) à (7), $R^a$ peut être absent ;

$R^b$ à chaque occurrence est indépendamment choisi parmi les groupes H et
alkyle en $C_{1-4}$, éventuellement avec un ou plusieurs substituants choisis parmi les groupes halogénure et -OH ;
dans la formule (3), k est un nombre entier compris dans la plage allant de 1 à 4 ; et
dans la formule (5), Y est O ou est absent.

**3.** Procédé de préparation de capsules sphériques telles que définies dans la revendication 1, comprenant le mélange d'une solution comprenant de la cellulose dialcoolique éventuellement substituée dissoute et un ou plusieurs composés organiques non polaires avec un antisolvant pour former les capsules sphériques, l'antisolvant comprenant ou étant constitué d'un ou de plusieurs composés, et présentant une ou plusieurs des caractéristiques suivantes :

(i) l'antisolvant présente une constante diélectrique calculée, $\varepsilon_{anti}$ inférieure à 80,1, où $\varepsilon_{anti}$ est calculée selon l'équation :

$$\varepsilon_{anti} = \sum_{i=1}^{n} \varepsilon_i M_i$$

où :

$\varepsilon_{anti}$ = la constante diélectrique calculée de l'antisolvant à 20 °C ;
$\varepsilon_i$ = la constante diélectrique du composé i pur à 20 °C ;
n = le nombre de composés différents dans l'antisolvant ;
$M_i$ = la fraction molaire du composé i dans l'antisolvant ;

(ii) l'antisolvant présente une polarité relative calculée, $[E_T^N]_{anti}$ inférieure à 1,00, calculée selon l'équation :

$$[E_T^N]_{anti} = \sum_{i=1}^{n} [E_T^N]_i M_i$$

où :

$[E_T^N]_{anti}$ = la polarité relative calculée de l'antisolvant ;
$[E_T^N]_i$ = la polarité relative du composé i pur à 25 °C et à pression atmosphérique, par rapport à l'eau ;
n = le nombre de composés différents dans l'antisolvant ;
$M_i$ = la fraction molaire du composé i dans l'antisolvant ;

(iii) l'antisolvant comprend un ou plusieurs composés choisis parmi les alcools en $C_{1-6}$, les diols en $C_{2-6}$, les triols en $C_{3-6}$, les halogénoalcools en $C_{1-6}$, les halogénodialcools en $C_{1-6}$, les éthers d'alcool en $C_{1-6}$, les éthers de glycol ou les éthers de glycérol en $C_{1-6}$, les cétones et les dicétones en $C_{1-6}$, les aldéhydes en $C_{1-6}$, les halogénoéthers en $C_{1-8}$, les amines en $C_{1-6}$, les alcoolamines en $C_{1-6}$, les acides carboxyliques en $C_{1-6}$ ainsi que leurs anhydrides et esters en $C_{1-4}$, les nitriles en $C_{1-6}$, les amides en $C_{1-6}$ et leurs dérivés alkyliques en $C_{1-2}$ N- ou N,N-substitués, les anhydrides ou amides cycliques en $C_{4-8}$, les organosulfates en $C_{1-6}$ et les sulfoxydes en $C_{1-6}$, et comprend éventuellement également de l'eau ;
(iv) la solubilité du solvant organique non polaire dans l'antisolvant est inférieure à 1 % en poids.

**4.** Procédé selon la revendication 3, dans lequel une ou plusieurs des conditions suivantes s'appliquent :

(i) le composé organique non polaire est choisi parmi les alcanes en $C_{3-8}$ et les isoalcanes en $C_{4-12}$ ;
(ii) la coque polymère des capsules sphériques est telle que définie dans la revendication 2 ;
(iii) la valeur $\varepsilon_{anti}$ de l'antisolvant est comprise dans la plage allant de 20,0 à 80,0, ou de 34,0 à 80,0.

**5.** Procédé selon la revendication 3 ou la revendication 4, dans lequel la solution comprenant la cellulose dialcoolique éventuellement substituée est ajoutée à l'antisolvant.

**6.** Procédé selon l'une quelconque des revendications 3 à 5, dans lequel les capsules sphériques sont expansibles.

**7.** Procédé selon la revendication 6, dans lequel les capsules sphériques sont expansées par chauffage au-dessus de la température de transition vitreuse et au-dessous de la température de fusion de la cellulose dialcoolique éventuellement substituée ; et/ou par réduction de la pression externe de 10 % ou plus.

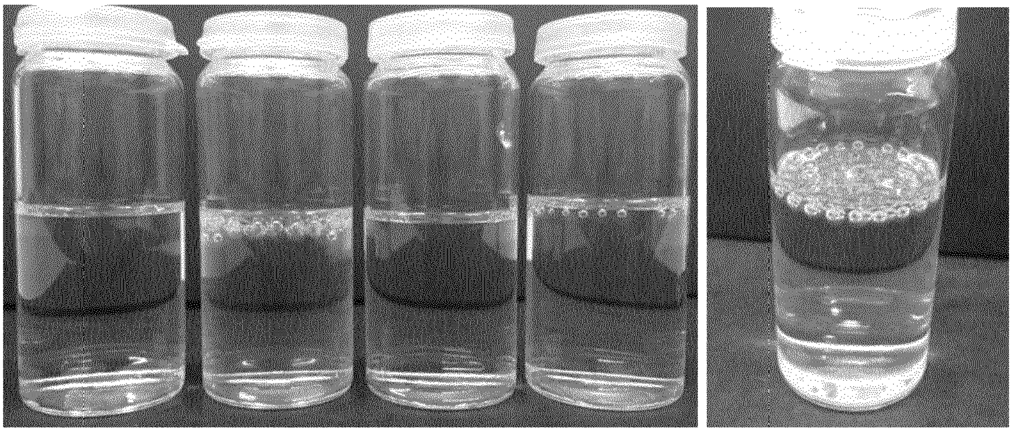

(a) (b) (c) (d) (e)

Fig. 1

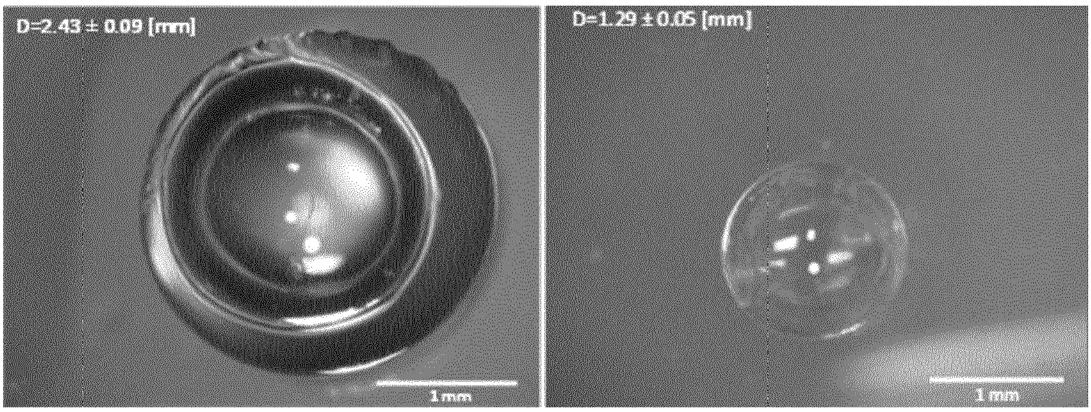


(a) (b)

Fig. 2

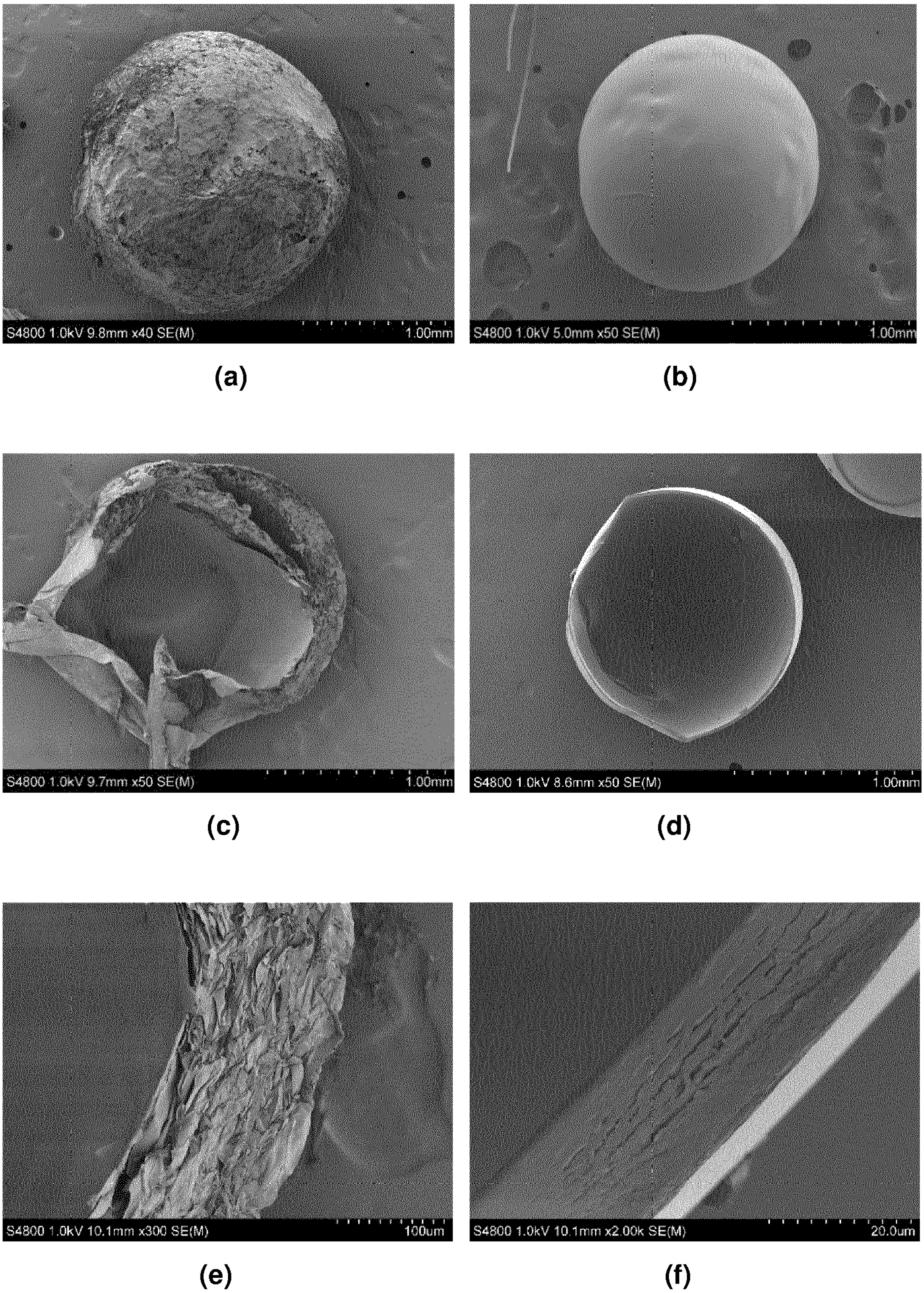
S4800 1.0kV 9.8mm x40 SE(M) 1.00mm
S4800 1.0kV 5.0mm x50 SE(M) 1.00mm
(a)
(b)
S4800 1.0kV 9.7mm x50 SE(M) 1.00mm
S4800 1.0kV 8.6mm x50 SE(M) 1.00mm
(c)
(d)
S4800 1.0kV 10.1mm x300 SE(M) 100um
S4800 1.0kV 10.1mm x2.00k SE(M) 20.0um
(e)
(f)

**Fig. 3**

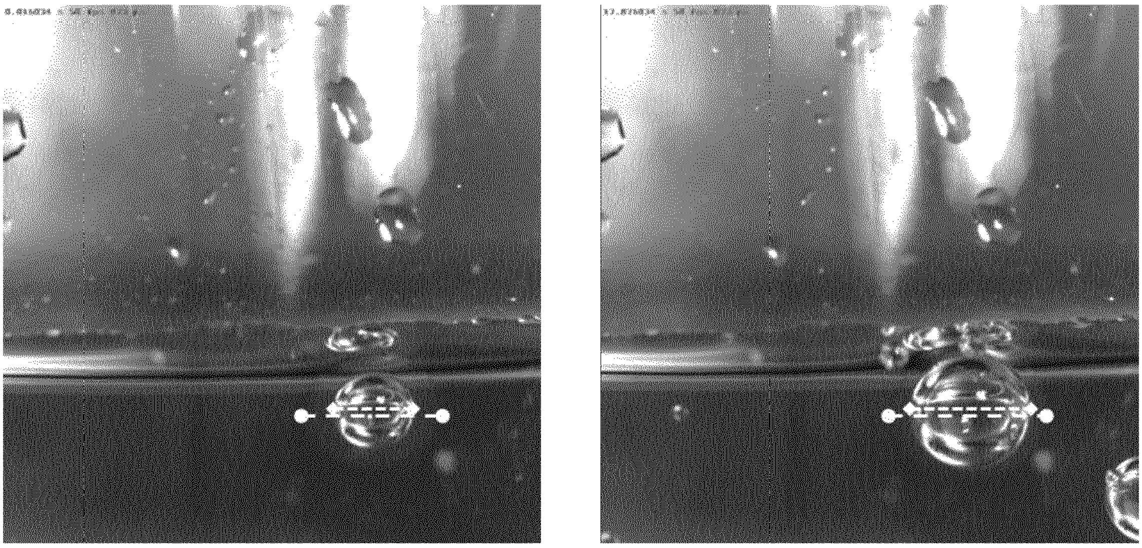

(a) (b)

**Fig. 4**

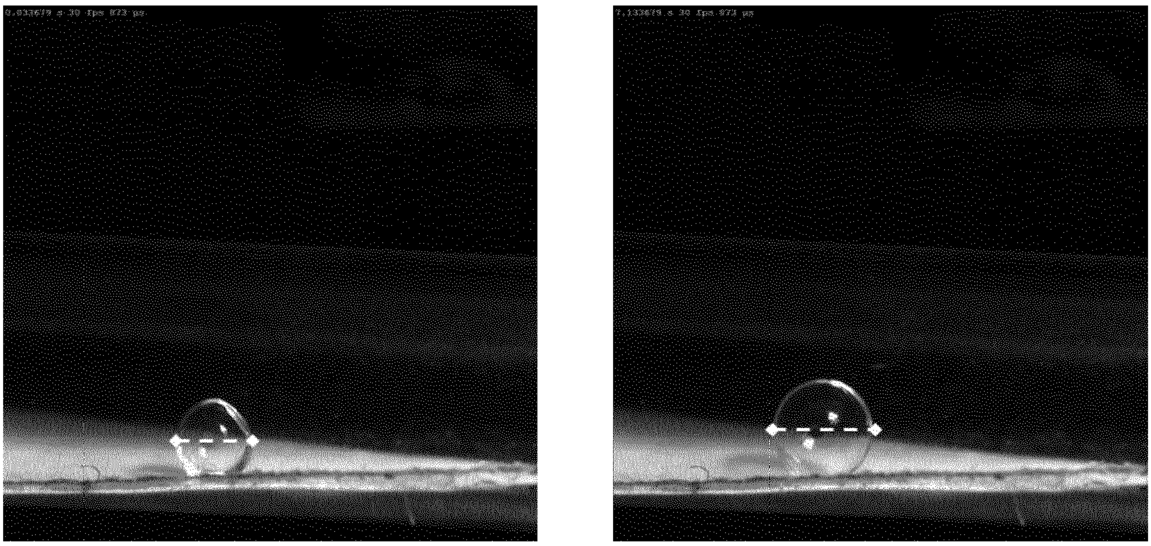

(a) (b)

**Fig. 5**

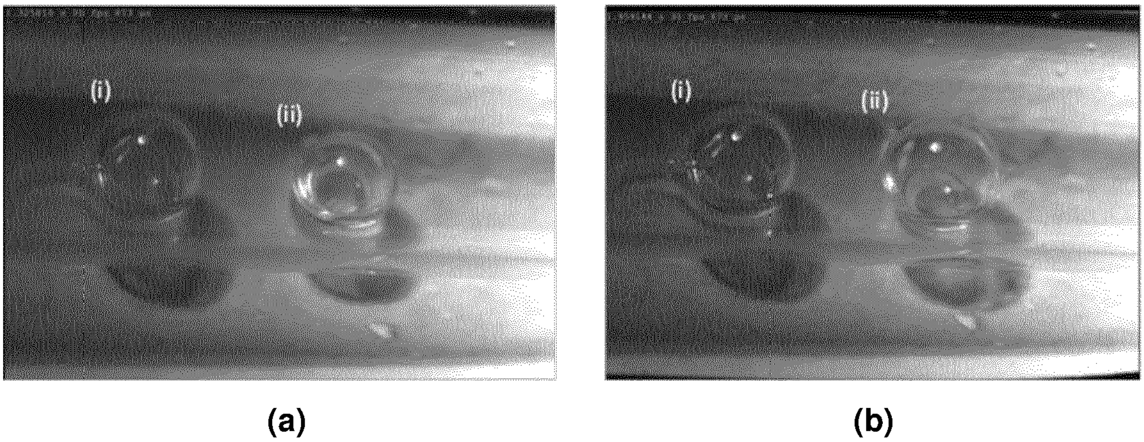


Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3615972 A
- WO 0037547 A
- WO 2007091960 A
- DE 102008024089
- WO 2004056549 A
- WO 2014198532 A
- WO 2016091847 A


### Non-patent literature cited in the description


- **PETTERSSON ; ERIKSSON.** *Anal. Biochem.,* 2000, vol. 285 (2), 220-224
- **LARSSON et al.** *Green Chemistry,* vol. 18 (11), 3324-3333
- **KASAI et al.** *Cellulose,* 2014, vol. 21, 769-776
- **LARSSON et al.** *Cellulose,* 2014, vol. 21, 323-333
- **LARSSON ; WÅGBERG.** *Green Chem.,* 2016, vol. 18, 3324-3333
- **ZHAO ; HEINDEL.** *Pharm Res,* 1991, vol. 8 (3), 400-402
- **LARSSON et al.** *Cellulose,* 2008, vol. 15, 837-847
- **LARSSON et al.** *Cellulose,* 2014, vol. 21, 325
- **LARSSON et al.** *Cellulose,* 2014, vol. 21, 323-333, 327
- **SEGAL et al.** *Text. Res. J.,* 1959, vol. 29 (10), 786-794
- **NISHIO et al.** *Cellulose,* 2006, vol. 13, 245-259
- **BERTHOLD et al.** *J. Appl. Polymer Sci.,* 2004, vol. 94 (2), 424-431
- **REICHARDT.** *Chem. Rev.,* 1994, vol. 94, 2319-2358
- **UTADA et al.** *MRS Bulleting,* 2007, vol. 32, 702-708
- **CARRICK et al.** *RCS Advances,* 2014, vol. 4, 19061-19067
- **CARRICK et al.** *ACS Appl. Mater. Interfaces,* 2014, vol. 6 (23), 20928-20935
- **CARRICK et al.** *Langmuir,* 2014, vol. 30 (26), 7635-7644